# EUROPEAN PATENT SPECIFICATION

(11) **EP 4 307 178 B1**
(45) Date of publication and mention of the grant of the patent: **25.11.2026**
(21) Application number: 22184968.0
(22) Date of filing: 14.07.2022
(51) Int. Cl.: G06N 5/02, G06N 5/04, G06N 5/022, G06N 5/046, G06N 20/00

(54) **SELF-ENHANCING KNOWLEDGE MODEL**
MODELL DES SELBSTERWEITERTEN WISSENS
MODÈLE DE CONNAISSANCES À AMÉLIORATION AUTOMATIQUE

(43) Date of publication of application: 17.01.2024
(73) Proprietor: ABB SCHWEIZ AG, 5400 Baden (CH)
(72) Inventor: SCHOCH, Nicolai, 69120 Heidelberg (DE); STARK, Katharina, 69469 Weinheim (DE); HOERNICKE, Mario, 76829 Landau (DE)
(74) Representative: Maiwald GmbH

(56) References cited:
- WO-A1-2021/050391
- BRANDT ET AL: "An ontology-based approach to knowledge management in design processes", COMPUTERS & CHEMICAL ENGINEERING, PERGAMON PRESS, OXFORD, GB, vol. 32, no. 1-2, 1 November 2007 (2007-11-01), pages 320 - 342, XP022324497, ISSN: 0098-1354, DOI: 10.1016/J.COMPCHEMENG.2007.04.013

## Description

### FIELD OF THE INVENTION

The invention relates to methods and systems for automatically augmenting a knowledge model representing one or more automation engineering domains.

### BACKGROUND

In the field of industrial automation, portfolios of software tools may be provided for process and automation engineering (P&AE). These tools may make use of an ontology or a knowledge graph. Typically, a human domain expert and/or an ontology engineering expert are needed to create and maintain the ontology for a particular domain. The ontology may eventually need to be extended to cover new domains. Creation and maintenance of ontologies by means of human effort is costly and unscalable.

The article "An ontology-based approach to knowledge management in design processes" by BRANDT ET AL, COMPUTERS & CHEMICAL ENGINEERING, PERGAMON PRESS, OXFORD, GB, vol. 32, no. 1-2, 1 November 2007 (2007-11-01), pages 320-342, ISSN: 0098-1354, DOI: 10.1016/J.COMPCHEMENG.2007.04.013, discloses an ontology-based approach to knowledge management in engineering design processes that comprise highly creative and knowledge-intensive tasks that involve extensive information exchange and communication among distributed teams. In such dynamic settings, traditional information management systems fail to provide adequate support due to their inflexible data structures and hard-wired usage procedures, as well as their restricted ability to integrate process and product information. It presents the idea of Process Data Warehousing as a means to provide a knowledge management and integration platform for such design processes.

WO 2021/050391 A1 discloses systems and methods for a machine learning platform that generates a library of components to generate machine learning models and machine learning applications. The machine learning infrastructure system allows a user (i.e., a data scientist) to generate machine learning applications without having detailed knowledge of the cloud-based network infrastructure or knowledge of how to generate code for building the model. The machine learning platform can analyze the identified data and the user provided desired prediction and performance characteristics to select one or more library components and associated API to generate a machine learning application. The machine learning can monitor and evaluate the outputs of the machine learning model to allow for feedbacks and adjustments to the model. The machine learning application can be trained, tested, and compiled for export as stand-alone executable code.

### SUMMARY

To better address one or more of these concerns, there is provided, in a first aspect, a method of automatically augmenting a knowledge model representing one or more automation engineering domains, the method comprising:
obtaining instance data relating to at least one component of an industrial automation system, wherein the component represents an instance of at least one entity in the knowledge model;
processing the instance data using one or more data analytics algorithms to derive knowledge to be added to the knowledge model; and
augmenting the knowledge model to represent the derived knowledge.

The knowledge model provides a formal semantic representation of domain terminology as well as the relationships between terms, and optionally also of the properties of the terms and the relationships therebetween. The knowledge model thus represents a knowledge base relating to the domain or domains in question. The knowledge model may comprise one or more ontological models. Additionally or alternatively, the knowledge model may comprise one or more knowledge graphs. Additionally or alternatively, the knowledge model may comprise one or more knowledge representations such as a semantic net, systems architecture, frame, or rule. The "ontological model" or "ontology" comprises one or more concepts and one or more ontological relationships or connections between the concepts. A knowledge graph may comprise an ontology, and may be used particularly when real instance data is linked to the concepts in the ontology. The ontological model may be manually and/or automatically extensible. The knowledge model may comprise one or more partial knowledge models, for example excerpts, portions, or parts of knowledge models. For example, the knowledge model may comprise one or more excerpts of an ontology and/or knowledge graph.

The ontological model defines concepts and their interrelations in terms of a structured and/or hierarchically sorted vocabulary. The ontological model may define interrelations or dependencies between concepts in terms of one or more axioms. Each domain may employ its own terminology, vocabulary, or lexicon, which may be represented in a "domain ontology". The ontological model may comprise one or more domain ontologies, representing concepts relevant to a particular domain of interest (e.g., a P&AE domain), such as chemical engineering, or power engineering. Additionally or alternatively, the ontological model may comprise an upper ontology, which extends across multiple domains. As well as concepts, the ontological model may comprise one or more properties, annotations, or individuals. The ontological model may unambiguously specify the semantics of the terminologies of the domain(s). The ontological model may comprise a single ontology, or may comprise multiple different subontologies. For example, the ontological model may comprise at least one process subontology comprising representations of one or more industrial processes, or general concepts to describe process plants. The process subontology may represent one or more of inputs, outputs, constraints, materials, and sequencing information, involved in the one or more industrial processes. The ontological model may comprise at least one subontology pertaining to requirements analysis or intentional modelling, to model the intentions of a plant owner (e.g. "I intend to separate oil and gas"). The ontological model may further comprise as subontologies one or more open-source ontologies such as OntoCAPE.

A knowledge graph comprises multiple statements (forming at least part of the knowledge base) in graphical form. In the knowledge graph, the concepts (now called entities) are represented in the form of a multidimensional plot, with the relationships between entities illustrated using links therebetween and/or their relative positioning. Real instance data can be linked to the concepts in the ontological model to create a knowledge graph. Concrete instances of concepts in the ontological model may thus form part of an ontology-based knowledge graph.

The knowledge model may be provided in a computer-interpretable format. For example, an ontological model may be specified in a language for authoring ontologies, such as a web ontology language (OWL), or any semantic serialization/formats (such as RDF).

The automation engineering domain may comprise one or more domains relating for example to process automation, factory automation, and warehouse automation. The automation engineering domain may comprise a process and automation engineering (P&AE) domain.

Instance data may be obtained from heterogeneous data sources using heterogenous data formats. The instance data may comprise measurement data and/or control data. The data may thus comprise one or more measured values and/or one or more control values. The instance data may relate to process monitoring and control. The data may comprise discrete time data and/or continuous time data such as timeseries data. Metrics and events may be timestamped for the purpose of creating timeseries data. The data may relate to one or more parameters or KPIs. The instance data may comprise engineering data. Sources of engineering data include P&ID diagrams and their information representation, cause-and-effect matrices and their information representation, I/O recipes for industrial process plant setups and their structured information representation.

One or more data storage systems may be used for storing instance data and other data described herein. For example, one or more between relational databases (RDBs), graph databases (GDBs) and timeseries databases (TSDBs) may be used. Relational and graph data can be stored and accessed as appropriate for ontological model-based data, and timeseries data can be stored in TSDBs. The relational and graph databases may be configured to allow sorting and querying according to columns, keys, indexes, or specifiers. TSDBs may be configured to allow querying and sorting data according to timestamps.

The information contained in the instance data may be represented in the knowledge model. The knowledge model may comprise entities or concepts representing metadata describing the instance data. In the case that the instance data comprises timeseries data, the knowledge model may comprise entities representing metadata about the timeseries data. The metadata may represent patterns (such as "standard behavior" or "abnormal behavior" or more detailed sub-concepts) or outliers (such as "critically above threshold"). These concepts may in turn include, or link to, information defining how to react to, or act on, the occurrence of such patterns, or information about how to interpret the occurrence of such patterns, which may for example lead to alarms, etc.

The one or more data analytics algorithms for processing the instance data to derive knowledge to be added to the knowledge model may comprise one or more machine learning algorithms. Additionally or alternatively, the one or more data analytics algorithms may comprise one or more semantic reasoning algorithms. Additionally or alternatively, the one or more data analytics algorithms may comprise one or more optimization algorithms. Additionally or alternatively, the one or more data analytics algorithms may comprise one or more general data manipulation (GDM) algorithms. Additionally or alternatively, the one or more data analytics algorithms may comprise one or more principal component analysis (PCA) algorithms. Additionally or alternatively, the one or more data analytics algorithms may comprise one or more regression or fitting algorithms. Additionally or alternatively, the one or more data analytics algorithms may comprise one or more classification algorithms. Additionally or alternatively, the one or more data analytics algorithms may minimize a loss function. The data analytics algorithms may be described as data (or information) processing algorithms. Any of the algorithms described herein may be referred to as being ontology-driven. Any of the algorithms described herein may be configured to query, access, process and feed information back to the ontology and knowledge graph. The algorithms may be configured to find patterns or correlations between a set of concepts, which patterns or correlations can then be represented together with the respective concepts to enhance or extend the knowledge model. "Enhance" may be understood as improving the knowledge model, whereas "extend" may be understood as enlarging the knowledge model.

The one or more machine learning algorithms may be executed using one or more machine learning models. The method may comprise creating a machine learning model to derive the knowledge to be added to the knowledge model. The machine learning model may be configured to perform one or more classification algorithms to assign a class or label to the instance data. Additionally or alternatively, the machine learning model may be configured to perform one or more regression algorithms to predict one or more continuations of the instance data. Creating the machine learning model may comprise training the model using training data to make predictions using new data. Training the model may comprise obtaining instance data relating to a first instance of a first concept or entity in the knowledge model, and using the instance data of the first instance as target data (or predicted data) for training the machine learning model. Training the model may further comprise obtaining instance data relating to at least one second instance of a second concept or entity in the knowledge model, and using the instance data of the at least one second instance as feature data (or predictor data) for training the machine learning model. The method may comprise identifying one or more further concepts related to the second concept in the knowledge model, and obtaining instance data for those further concepts for use in training the model. The obtained instance data may then be used to train the model. The method may comprise evaluating or validating the created machine learning model. Validating the model may comprise using a train-test method. The method may comprise augmenting the model based on the validation result. The created machine learning model may then be used to process new instance data to generate one or more responses, insights, or interrelations to be added to the knowledge model. The one or more responses may be used to determine one or more ontological relationships (e.g., correlations, patterns, trends, anomalies, Boolean relationships, or dependencies) to be added to the knowledge model.

The method may comprise performing a feature selection step for selecting training data for training the machine learning model. For example, the first and second concepts may be identified based on a direct link therebetween in the knowledge model. The first and second concepts may be selected based on an indirect link therebetween in the knowledge model. The presence of a direct or indirect link can be used to provide a more intelligent selection of features/columns for training the machine learning model. The first and second concepts may be selected based on the absence of a direct or indirect link therebetween in the knowledge model. The first and second concepts may be selected at random. Even if the knowledge model does not represent any relationship between the first and second concepts, the machine learning model can still be used to determine whether there is such a relationship and, if so, accordingly create an ontological relationship between the first and second concepts for addition to the knowledge model.

The one or more semantic reasoning algorithms may comprise algorithms for performing one or more of: knowledge propagation, semantic querying, data/knowledge discovery and/or accessibility, and semantic inference. Using the one or more semantic reasoning algorithms may comprise using a semantic reasoner (alternatively describable as a reasoning or inference engine, rules engine, or a reasoner) to determine the consistency and/or completeness of the knowledge model and/or of data associated therewith (for example of instance data in a related knowledge graph). For example, the method may comprise using the semantic reasoner to classify or re-parent data into their according classes or concepts. The method may comprise using a semantic reasoner to infer logical consequences from the knowledge model. Inference rules may be specified for this purpose, for example by means of an ontology language and/or a description logic language. The semantic reasoner may be configured to use first-order predicate logic to perform reasoning, for example to perform inference by forward chaining and backward chaining. The semantic reasoner may be configured to determine whether the ontology is consistent, to identify subsumption relations between concepts, and so on. Consistency checks may be performed periodically, continuously, or in response to the entry of new information/data. For example, the entry of a new reactor instance may indicate the need for a PID controller instance.

Other ontology-driven data analytics algorithms which may be applied comprise ontology-based learning algorithms (for example to extract concepts and ontological relationships from natural language text), inference engines, theorem provers, and so on.

The data analytics algorithms may be implemented for example using ontology-oriented programming and, e.g., Python and owlready2 language and library. The data analytics algorithms may be implemented using one or more stand-alone tools for data analytics and/or machine learning. In any case, methods may be provided to work on the classes/concepts of ontologies and on the respective instance data. These methods may be provided by an existing automation engineering software product portfolio or implemented specifically to provide the new functionalities.

Augmenting the knowledge model to represent the derived knowledge may comprise adding at least part of the derived knowledge as new knowledge which did not previously form part of the knowledge model. Augmenting the knowledge model to represent the derived knowledge may comprise using at least part of the derived knowledge to correct or complete previously existing incorrect or incomplete knowledge. Augmenting the knowledge model to represent the derived knowledge may using at least part of the derived knowledge to remove or diminish previously existing knowledge which was incorrect or superfluous.

The step of augmenting or populating the knowledge model may comprise adding, editing, or removing one or more (instances of) concepts and/or relationships therebetween and/or properties thereof based on the output of the one or more data analytics algorithms. For example, the output of the one or more data analytics algorithms may be added as an ontological relationship between concepts (e.g. the first and second concepts) in an ontological model and/or as a new edge in a knowledge graph. The output may indicate, for example, a dependency, relation, correlation, co-occurrence, root cause, or causal trend, between the concepts or entities. Bootstrapping methods may be used for augmenting the knowledge model.

The augmented knowledge may be annotated to indicate its origin, for example as an algorithm-derived or ML-added concept. The annotation may take the form of a semantic annotation (e.g., a flag, tag or the like) indicating that it is machine-created (in contrast to human- or expert-created). The annotation may be taken into account by future reasoning results based thereon for transparency.

Augmentations to the knowledge model may be input using any appropriate format, such as OWL in the case of an ontological model.

Augmenting the knowledge model may comprise using one or more ontology-based learning algorithms to identify the knowledge to be added to the knowledge model based on the output of the one or more data analytics algorithms. For example, the one or more ontology learning algorithms may comprise one or more of the following steps: domain terminology extraction; concept discovery; concept-to-concept relation discovery (where relation again may be one of: pattern, anomaly, correlation, trend, dependency, Boolean relationship, etc.); concept hierarchy derivation; learning of non-taxonomic relations (that do not express any sub- or supersumption); rule discovery (generation of axioms); ontology population; concept hierarchy extension; frame and event detection.

Knowledge derived from the data analytics algorithms may be verified or validated before changes are made to the knowledge model. For example, a threshold number of appearances may be required before the knowledge is deemed safe to add. The method may further comprise automatically executing one or more data analytics algorithms to determine completeness and/or correctness of knowledge already comprised in the knowledge model, for the purposes of verification.

The method may comprise implementing one or more steps to handle uncertainty in relation to the derived knowledge. For example, the derived knowledge (e.g., its edge or relation in the knowledge graph, or the corresponding node in the ontology) may be annotated (using a flag, or tag, for example) to indicate that it is subject to uncertainty. The annotation may further specify the uncertainty, for example its origin, or may trigger the data analytics algorithms to investigate further, in order to thus possibly remove or decrease the uncertainty. In one particular example, a concept may be given the 'uncertainty' flag if it is a measurement concept, e.g., pressure, which is uncertain or volatile under certain environmental conditions, or which cannot be measured exactly.

The method may further comprise applying the augmented knowledge model. The augmented knowledge model may be applied for example in controlling and/or automating the industrial automation system. The augmented knowledge model may be used for monitoring the industrial automation system. The monitoring may comprise using the augmented knowledge model in the detection or diagnoses of one or more faults, abnormalities, patterns or trends in the industrial automation system. Corrective action may be triggered as a result. The augmented knowledge model may be used to define one or more alarms. The augmented knowledge model may be used for adapting the industrial automation system and/or for recommending such adaptations. The augmented knowledge model may be used for identifying one or more sequences of required actions. The augmented knowledge model may be used for decision support. The augmented knowledge model may be used for predictive analytics or predictive maintenance. The augmented knowledge model may be used for guided self-service.

In one decision support example, the method of the first aspect may be performed to support missing data imputation. This may be done by means of checking similar cases. For example, an axiom in the ontology may state that a certain set of properties or features X1, ..., XN (possibly with instance data within/higher/lower than certain thresholds) is indicative of the existence of another property. But the set of features is not comprehensively available or known, so a deterministic inference cannot be drawn. Here, the method may be triggered to investigate the relation and possibly yield tentative inference, i.e., probabilistic decision support.

While the method of the first aspect has been described in terms of a knowledge model representing automation engineering domains, in connection with instance data relating to an industrial automation system, it will be appreciated that the systems and methods described herein may alternatively find application outside of the said domains.

The method of the first step may be initiated manually and/or automatically. In one example, the knowledge model (particularly the making of an augmentation thereto) triggers execution of the one or more data analytics algorithms along with the respective feature/target data used, before the data analytics algorithms feed knowledge back into the model. In this way, the method may be performed in a loop-wise or cyclical fashion.

The method of the first aspect may be computer implemented.

According to a second aspect, there is provided a computing system configured to perform the method of the first aspect. The computing system may comprise, or be comprised in, an engineering support system or a decision support system, for example.

According to a third aspect, there is provided a computer program comprising instructions which, when executed by a computing system, enable or cause the computing system to perform the method of the first aspect.

According to a fourth aspect, there is provided a computer-readable medium comprising instructions which, when executed by a computing system, enable or cause the computing system to perform the method of the first aspect. The computer-readable medium may be transitory or non-transitory, volatile or non-volatile.

Provided by the present disclosure are systems and methods for process and automation engineering ontology self-enhancement plus knowledge-graph-driven advanced data analytics and machine learning.

Advantageously, the systems and methods described herein provide a knowledge model (e.g., an ontology and/or knowledge graph) which can continuously self-enhance, self-extend, and self-verify.

The systems and methods disclosed herein provide for scalability of the knowledge model. The need for human domain experts and ontology engineering experts to create and maintain the ontology is obviated. The present disclosure recognizes the availability of existing applications with partly structured data, which may be leveraged to populate and grow the ontologies and knowledge graphs using the methods and systems described herein.

The systems and methods described herein provide for intrinsically explainable, interpretable, and transparent algorithm output. Since the features that are used by the algorithms are derived from ontological concepts which per se have a clearly represented meaning, so do the components output by the algorithms. This is in contrast to traditional data analytics and machine learning methods which often have the disadvantage of being black-box algorithms which cannot explain their output. E.g., "a correlation between two features A and B" found by the algorithms described herein is "a correlation between two features pressure and temperature", since concept A has the ontological meaning of pressure, and B temperature. The correlation thus becomes directly transparent and explainable and understandable to a human. This even holds for series, sets, and combinations of such relations, and nested versions of all these. Thus, when concept A to B is transparent and concept B to C is also transparent, then also concept A to C is transparent (i.e., clear, understandable, explainable).

The systems and methods described enable autonomous industrial plants. By having access to an ontology-based system with data analytics algorithms, the plant is able to sense and measure its environment, to know its capabilities and internal state, and it can cognitively understand and perceive its environment.

The term "obtaining", as used herein, may comprise, for example, receiving from another system, device, or process; receiving via an interaction with a user; loading or retrieving from storage or memory; measuring or capturing using sensors or other data acquisition devices.

The term "determining", as used herein, encompasses a wide variety of actions, and may comprise, for example, calculating, computing, processing, deriving, investigating, looking up (e.g., looking up in a table, a database or another data structure), ascertaining, and the like. Also, "determining" may comprise receiving (e.g., receiving information), accessing (e.g., accessing data in a memory), and the like. Also, "determining" may comprise resolving, selecting, choosing, establishing and the like.

The indefinite article "a" or "an" does not exclude a plurality. In addition, the articles "a" and "an" as used herein should generally be construed to mean "one or more" unless specified otherwise or clear from the context to be directed to a singular form.

Unless specified otherwise, or clear from the context, the phrases "one or more of A, B and C", "at least one of A, B, and C", and "A, B and/or C" as used herein are intended to mean all possible permutations of one or more of the listed items. That is, the phrase "A and/or B" means (A), (B), or (A and B), while the phrase "A, B, and/or C" means (A), (B), (C), (A and B), (A and C), (B and C), or (A, B, and C).

The term "comprising" does not exclude other elements or steps. Furthermore, the terms "comprising", "including", "having" and the like may be used interchangeably herein.

The invention may include one or more aspects, examples or features in isolation or combination whether specifically disclosed in that combination or in isolation. Any optional feature or sub-aspect of one of the above aspects applies as appropriate to any of the other aspects.

These and other aspects of the invention will be apparent from and elucidated with reference to the embodiments described hereinafter.

### BRIEF DESCRIPTION OF THE DRAWINGS

A detailed description will now be given, by way of example only, with reference to the accompanying drawings, in which:-
Fig. 1 illustrates a modular industrial process plant;
Fig. 2 illustrates how modules may be arranged to form a pipeline in the industrial process plant of fig. 1;
Fig. 3 shows an excerpt from an ontology and its related knowledge graph representing the pipeline of fig. 2;
Fig. 4 illustrates an engineering support system according to the present disclosure;
Figs. 5A and 5B illustrate one example of a data analytics algorithm executed by the system of fig. 4; and
Fig. 6 illustrates a computing system that can be used in accordance with the systems and methods disclosed herein.

### DETAILED DESCRIPTION

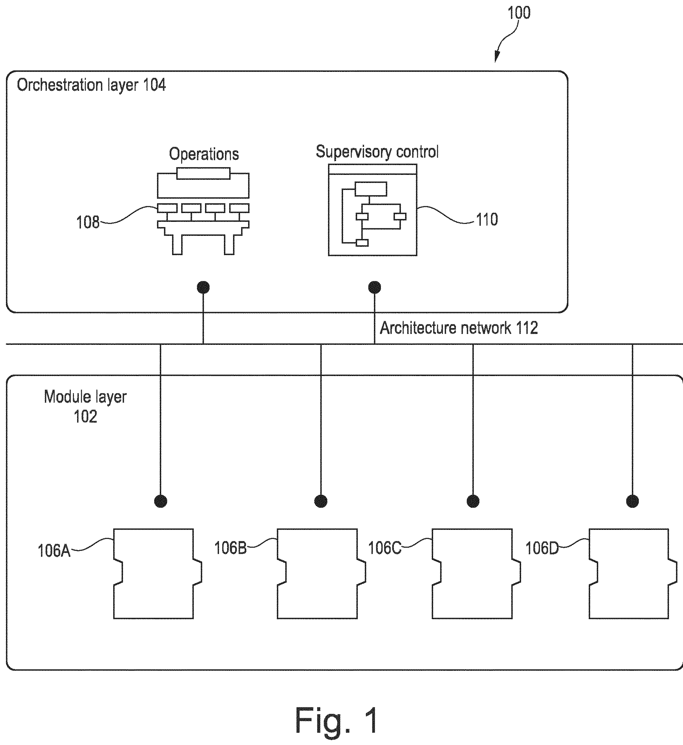

Fig. 1 illustrates an industrial process plant 100 which has two layers: a module layer 102 and an orchestration layer 104.

The module layer 102 comprises a plurality of process modules 106, comprising individual modules 106A-D. Each module 106 provides a set of encapsulated process functions, called services, that can be orchestrated by the supervisory control system 110. Each module 106 comprises a controller (not shown) executing control logic of the module. Each module 106 may further comprise one or more field devices, instrument devices, actuators, or sensors that are necessary for carrying out the services. The modules 106 may exchange data in the form of control values and measurement values of various parameters with each other and with the orchestration layer 104. Such data may be used as "instance data", as referred to herein. Each module 106 is described by a configuration file in the form of a module type package (MTP). MTP is a standard in the field of modular automation systems which creates a framework for interoperability between modules and the orchestration layer. Modules in the context of MTP may be called process equipment assemblies (PEAs).

The orchestration layer 104 comprises an operations desk 108 and a supervisory control system 110. The orchestration layer 104 integrates the modules 106 in order to combine them into one process plant. By controlling the services of the modules 106 in the right way, the orchestration layer 104 ensures that the modules 106 cooperate to realize a particular process recipe.

An architecture network 112 connects the layers. Communication of data over the network 112 takes place using the OPC UA protocol. OPC UA is a platform-independent, service-oriented client-server architecture which transports and semantically describes instance data. Each module 106 comprises an OPC UA server (not shown) which exposes instance data and services of the module to the supervisory control system 110. Data is exposed via an address space. The supervisory control system 110 comprises an OPC UA client (not shown) which connects to the OPC UA servers of the modules 106 to communicate commands to the modules 106. The OPC UA client may be used, for example, to find instance data from the address space of the OPC UA server, to read and write data, to subscribe to certain data changes or events such as alarms, and to call methods.

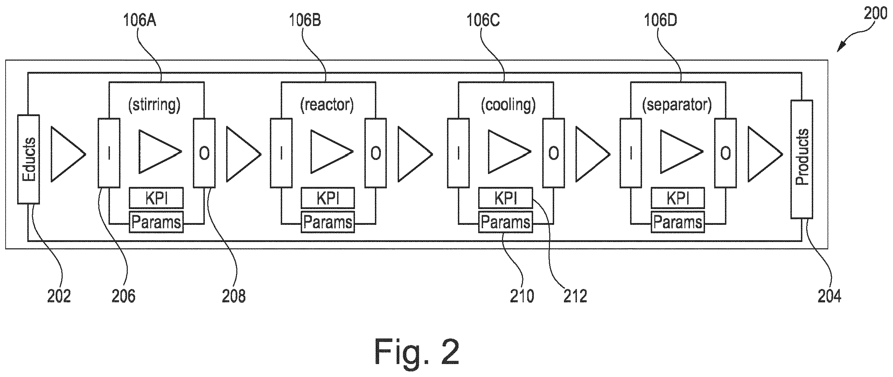

Fig. 2 illustrates how the modules 106 may be arranged to form a pipeline 200 in the industrial process plant 100. In this non-limiting example, the module 106A is a stirring module, the module 106B is a reactor module, the module 106C is a cooling module, and the module 106D is a separator module. The pipeline 200 is configured to transform one or more educts 202 (as input) into one or more products 204 (as output). The educts 202 are provided to an input 206 of the stirring module 106A, whose output 208 is connected to the input of the reactor module 106B, and so on, until the products 204 are available at the output of the separator module 106D. Each module 106 is associated with instance data relating to one or more parameters 210 and/or KPIs 212.

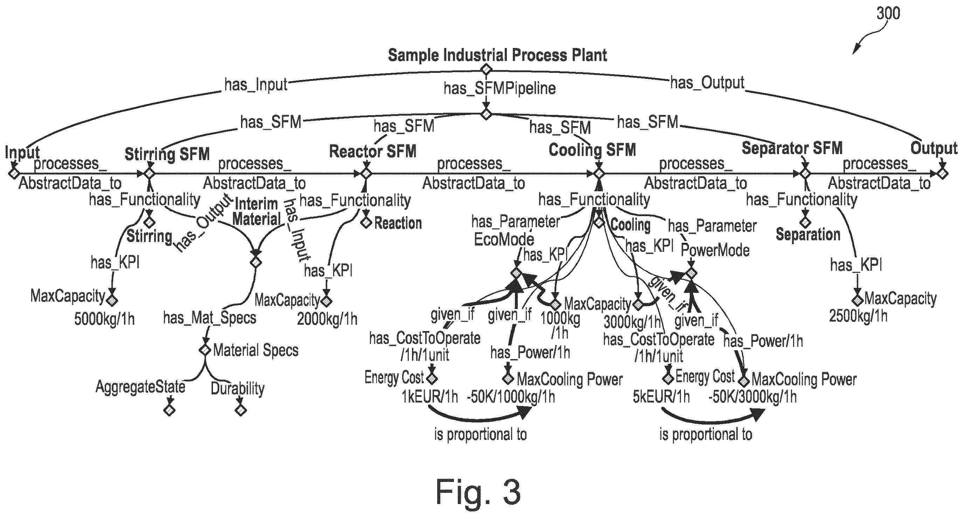

Fig. 3 shows an excerpt 300 from an ontology and its related knowledge graph (with concepts, instances, relations between concepts and between instances, annotations, and instance data and values) representing the pipeline 200. Each node in the excerpt 300 is a concept or instance of a concept representing some aspect of the pipeline 200 including its relationship with the plant 100. For example, concepts are provided for each of the modules 106 along with their functionality, parameters, and KPIs. Links between nodes represent ontological relationships between concepts and between concepts and instances. The excerpt 300 may be used by various software tools which support the process engineer, automation engineer and/or control engineer in performing their tasks, thereby facilitating interoperability between the tools as part of an application portfolio. The excerpt 300 provides a knowledge model which can be used by the tools but which is decoupled from the applications themselves. The excerpt 300 may be used to capture, represent, and link process and engineering knowledge, to provide data discovery and usage while overcoming information silos, and to answer complex questions. Creating and maintaining such ontologies has traditionally involved significant human effort.

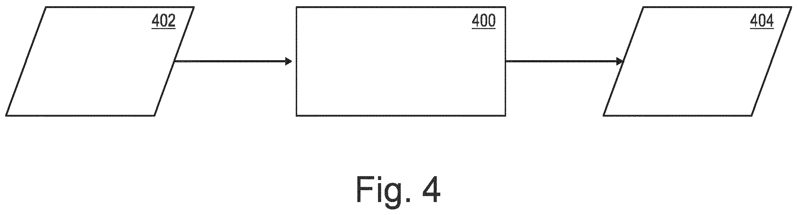

The present disclosure therefore provides an ontology-based data-driven engineering support system 400, as shown in fig. 4, whereby the excerpt 300 can transparently and scalably self-enhance and self-assess. The system 400 is configured to obtain instance data 402 relating to at least one component of the plant 100, to process the instance data 402 using one or more data analytics algorithms to derive knowledge 404, and to augment the excerpt 300 to represent the derived knowledge 404. Data is managed by the system 400 (i.e., stored, retrieved, accessed, found, shared, used, etc.) in a semantic way by virtue of its being linked to the excerpt 300 and the concepts and relationships contained therein. Thus, in contrast to conventional black-box data analytics algorithms, the output of the system 400 is inherently explainable: the feature (vectors) and target (values), or the "big data versions", i.e., sets of corresponding feature vectors and target values, are taken by the data analytics algorithms of the system 400 with an underlying meaning, since the excerpt 300 itself represents the meanings and interrelations of its concepts.

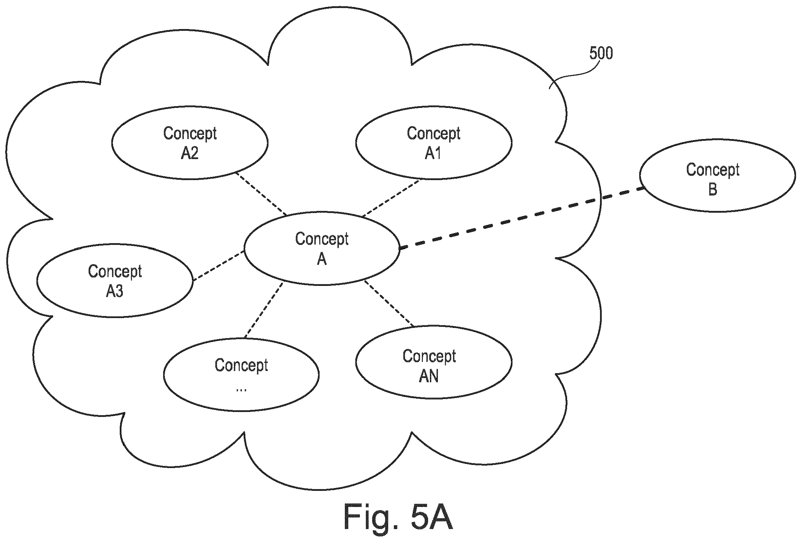

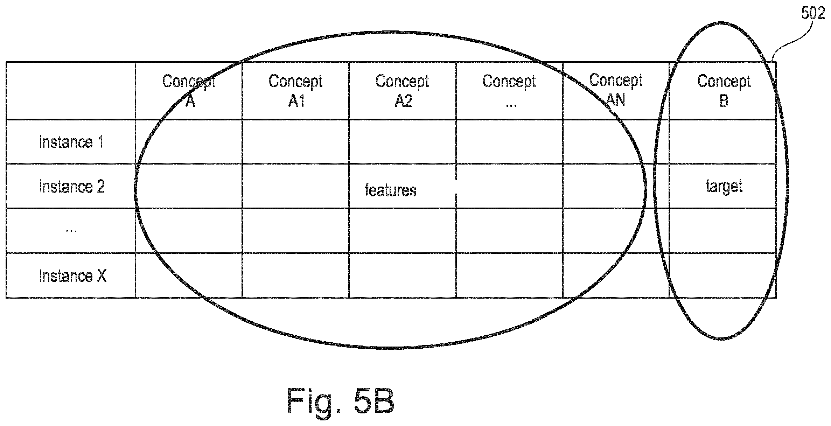

One non-limiting example of a data analytics algorithm used by the system 400 is illustrated with reference to figs. 5A and 5B. Shown in fig. 5A is a generalized ontology 500 comprising a concept A which is linked to a plurality of other concepts, concepts A1, ..., AN. Concept B is, or may be, related to concept A. The algorithm in this case is a machine learning algorithm comprising the following steps:-
Step 1: Get all related concepts A, A1, ..., AN;
Step 2: Get all related instance data of all available instances of the respective concepts;
Step 3: Create a corresponding relational table 502 with columns according to the concepts B, A, A1, ..., AN, and with rows consisting of the available instances, as shown in fig. 5B;
Step 4: Create a machine learning model (e.g., a classifier, regressor, pattern analyzer, etc.);
Step 5: Train the model with the instance data in the table 502 (taking features from columns Ax and the target from column B);
Step 6: Train-test the model; and
Step 7: Take the (evaluation) result as new knowledge to be represented in the excerpt 300.

Non-limiting examples of algorithms that may be executed by the system 400 are provided as follows.

### Example 1

In this example, the concepts Ax (level, valve-open, flow, pressure, temperature) are known to be in relation with each other, as represented in the ontology. The algorithm functions in this case to determine whether and how those concepts are related to conductivity, serving in this case as concept B. Hence, the table 502 comprising instance data (not shown) for these concepts may be constructed as follows.

| | Tank level | Valve open | Flow | Pressure | Temperature | Conductivity (target) |
|---|---|---|---|---|---|---|
| Instance 1 | ... | | ... | ... | ... | |
| Instance 2 | ... | ... | ... | ... | ... | ... |
| ... | ... | ... | ... | | ... | ... |
| Instance n | ... | ... | ... | ... | ... | ... |

The ontology and the related knowledge graph may already indicate known ontological relationships between these concepts. For example, for every instance X, if "Valve open" is true, "Flow" is positive number. Or, if "Valve open" is true, "Tank level" is increasing linearly. So, these known relations (if X true then Y positive, or if X then f(t)=level linearly increasing depending on t time) are visible in the data in the table.

Thus, taking the so-far-unrelated concept "Conductivity" as the target, the algorithm may reveal that the data points for all instances reveal a dependency. E.g., the conductivity may depend on the tank level and/or the temperature. This dependency may be described by an if-else statement, or by means of a Boolean operation, or by means of a more complex (even multi-variate) mathematical function such as conductivity = f(temp, level, a,b,c) where a,b,c are other concepts, and where f may be linear or other. If the model determines that such a dependency can be described (for example by fitting the data points in the "Conductivity" column), the system 400 may feed back this information to the ontology to establish a new ontological relationship.

Generally, any of the items (and the corresponding values or related information) appearing in e.g. P&ID diagrams; cause-and-effect matrices, and process I/O recipes for industrial process plant setups, as well as combinations thereof, may be used in this way.

### Example 2

In a second non-limiting example, hazard and operability (HazOp) values and their interrelations are considered. In this example, a subset of parameters are known to be in relation with each other according to the ontology, as shown in the following table. However, the concept "Vibrations" is not represented in the ontology and therefore the relation between this concept and the others is unknown.

| | HazOp Flow | HazOp Pressure | HazOp Temperature | HazOp Agitation | Vibrations (target) |
|---|---|---|---|---|---|
| Instance 1 | ... | ... | ... | ... | ... |
| Instance 2 | ... | ... | ... | ... | ... |
| | | ... | ... | ... | ... |
| Instance n | ... | ... | ... | ... | ... |

The model in this example is trained to approximate the relations between features and target by minimizing the error between the model output and the data points. In other words, the model finds a function which approximates how the concepts relate, so as to determine the so-far-unknown relations, which are fed back to the ontology to be accordingly represented as new relations.

### Example 3

In this non-limiting example, the instance data comprises timeseries data relating to temperature and pressure in a reactor module. Here, the ontology relates the required energy to heat up the reactor to a certain required min. temperature which enables a chemical reaction. The relation comprises a function f to describe the required energy depending on the reactor volume (per reaction unit): energy = f(processed volume). This relation may have been set up without considering that day-night-temperatures vary heavily in certain locations, and that therefore, a fixed amount of energy per reaction unit may not be appropriate. The table 502 might hence look as follows:

| | Energy | Processed volume | Outside temperature (target) | Time of day (target) |
|---|---|---|---|---|
| Reactor instance 1 | ... | ... | ... | ... |
| Reactor instance 2 | | ... | | ... |
| ... | ... | ... | ... | ... |
| Reactor instance n | ... | ... | ... | ... |

For all reactor instances, energy and processed volume should be correlated proportionally, since this is also what the ontology describes. However, the data shows that this does not hold for every time of the day: in the night, with low temperatures, more energy is needed, and during day, with higher temperatures, less energy is needed. Hence, the known-to-be-related columns "Energy" and "Processed volume" are put together with the not-known-to-be-related columns "Outside temperature" and "Time of day" into a machine learning model, whereby the regression algorithm minimizes the error between the assumed model (proportional dependency) and the real data. The newly learned model shows that energy is not only a function of the processed volume (i.e., energy = f(volume)) but that it additionally depends on the temperature and time of day, i.e., energy = f(volume, outside-temp, time-of-day). Accordingly, this relation is fed back into the ontological model.

### Example 4

In this non-limiting example relating to decision support, an axiom in the ontology states that: "if feature 1 (pressure) too high (higher than value 10), and feature 2 (temperature) too low (lower than value 7), and feature 3 (density) too high (higher than value A), and feature 4 (concentration) in certain threshold (between value x and y), then feature Z (stability) is not guaranteed". Assuming that, for a new instance data point, values of feature 1, 2, 4, are known but not for feature 3, the axiom will not produce a satisfying indication. The system 400 may execute the data analytics algorithms to determine the relationship between features 1 to 4 and Z and to find patterns or trends that state how important feature 3 actually is for impacting feature Z. The algorithms in such a case may use Principal Component Analysis (PCA). In case feature 3 plays a non-important role, "tentative" decision support may be provided, in saying that "feature Z is very likely to be true, since features 1, 2, 4 are given, and feature 3 (which would actually be required for a 100% deterministic decision) is not important (according to X amount of similar data points in the knowledge graph)". In case feature 3 plays an important role, an indication of uncertainty may be provided, indicating for example that, "even though features 1, 2, 4 indicate that feature Z is true, the indication is very uncertain, since feature 3 which has a high impact is not known". Such tentative reasoning not only assists in answering concrete questions (such as in relation to feature Z when features 1 to 4 are partially known), but can also be applied to enhance or extend the knowledge model itself: having data linked to the ontology, one can conduct analyses such as this for different combinations of features and concepts to obtain an enhanced knowledge model with probabilistic reasoning support.

In another non-limiting example, semantic "for-all-X" commands and queries may be built and executed. For example, the ontology or knowledge graph may be queried for all pipelines (i.e., for all pipeline alternatives) and KPIs may be computed, parameters minimized, optimized, or maximized, based on ontology-defined relationships. General semantic queries on the ontology and/or knowledge graph may be built. For example, the ontology may be queried with respect to one concept of interest, for all related concepts, properties, and parameters (e.g., using SPARQL), which directly reveals all potentially relevant information, since all related concepts are represented as such in the ontology by means of properties, axioms, dependencies, etc. When the ontology is linked to real instance data (i.e., in a knowledge graph), this data is also directly linked and can hence be queried too. Moreover, data that is linked to a concept can be queried on single instances but also on many or all instances of the given concept, or even on instances of related concepts, on the basis of which the algorithms described herein may find correlations or trends, or detect patterns, similarities, and outliers.

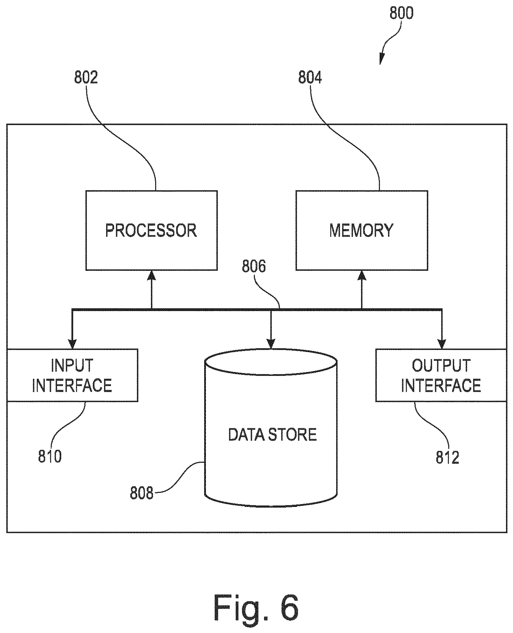

Fig. 6 illustrates an exemplary computing system 800 that can be used in accordance with the systems and methods disclosed herein. The computing system 800 may form part of or comprise any desktop, laptop, server, or cloud-based computing system. The computing system 800 includes at least one processor 802 that executes instructions that are stored in a memory 804. The instructions may be, for instance, instructions for implementing functionality described as being carried out by one or more components described herein or instructions for implementing one or more of the methods described herein. The processor 802 may access the memory 804 by way of a system bus 806. In addition to storing executable instructions, the memory 804 may also store conversational inputs, scores assigned to the conversational inputs, etc.

The computing system 800 additionally includes a data store 808 that is accessible by the processor 802 by way of the system bus 806. The data store 808 may include executable instructions, log data, etc. The computing system 800 also includes an input interface 810 that allows external devices to communicate with the computing system 800. For instance, the input interface 810 may be used to receive instructions from an external computer device, from a user, etc. The computing system 800 also includes an output interface 812 that interfaces the computing system 800 with one or more external devices. For example, the computing system 800 may display text, images, etc. by way of the output interface 812.

It is contemplated that the external devices that communicate with the computing system 800 via the input interface 810 and the output interface 812 can be included in an environment that provides substantially any type of user interface with which a user can interact. Examples of user interface types include graphical user interfaces, natural user interfaces, and so forth. For instance, a graphical user interface may accept input from a user employing input device(s) such as a keyboard, mouse, remote control, or the like and provide output on an output device such as a display. Further, a natural user interface may enable a user to interact with the computing system 800 in a manner free from constraints imposed by input device such as keyboards, mice, remote controls, and the like. Rather, a natural user interface can rely on speech recognition, touch and stylus recognition, gesture recognition both on screen and adjacent to the screen, air gestures, head and eye tracking, voice and speech, vision, touch, gestures, machine intelligence, and so forth.

Additionally, while illustrated as a single system, it is to be understood that the computing system 800 may be a distributed system. Thus, for instance, several devices may be in communication by way of a network connection and may collectively perform tasks described as being performed by the computing system 800.

Various functions described herein can be implemented in hardware, software, or any combination thereof. If implemented in software, the functions can be stored on or transmitted over as one or more instructions or code on a computer-readable medium. Computer-readable media include computer-readable storage media. Computer-readable storage media can be any available storage media that can be accessed by a computer. By way of example, and not limitation, such computer-readable storage media can comprise FLASH storage media, RAM, ROM, EEPROM, CD-ROM or other optical disk storage, magnetic disk storage or other magnetic storage devices, or any other medium that can be used to carry or store desired program code in the form of instructions or data structures and that can be accessed by a computer. Disk and disc, as used herein, include compact disc (CD), laser disc, optical disc, digital versatile disc (DVD), floppy disk, and Blu-ray disc (BD), where disks usually reproduce data magnetically and discs usually reproduce data optically with lasers. Further, a propagated signal is not included within the scope of computer-readable storage media. Computer-readable media also includes communication media including any medium that facilitates transfer of a computer program from one place to another. A connection, for instance, can be a communication medium. For example, if the software is transmitted from a website, server, or other remote source using a coaxial cable, fiber optic cable, twisted pair, digital subscriber line (DSL), or wireless technologies such as infrared, radio, and microwave, then the coaxial cable, fiber optic cable, twisted pair, DSL, or wireless technologies such as infrared, radio and microwave are included in the definition of communication medium. Combinations of the above should also be included within the scope of computer-readable media.

Alternatively, or in addition, the functionally described herein can be performed, at least in part, by one or more hardware logic components. For example, and without limitation, illustrative types of hardware logic components that can be used include Field-programmable Gate Arrays (FPGAs), Program-specific Integrated Circuits (ASICs), Program-specific Standard Products (ASSPs), System-on-a-chip systems (SOCs), Complex Programmable Logic Devices (CPLDs), etc.

It will be appreciated that the aforementioned circuitry may have other functions in addition to the mentioned functions, and that these functions may be performed by the same circuit.

The applicant hereby discloses in isolation each individual feature described herein and any combination of two or more such features, to the extent that such features or combinations are capable of being carried out based on the present specification as a whole in the light of the common general knowledge of a person skilled in the art, irrespective of whether such features or combinations of features solve any problems disclosed herein, and without limitation to the scope of the claims. The applicant indicates that aspects of the present invention may consist of any such individual feature or combination of features.

It has to be noted that embodiments of the invention are described with reference to different categories. In particular, some examples are described with reference to methods whereas others are described with reference to apparatus. However, a person skilled in the art will gather from the description that, unless otherwise notified, in addition to any combination of features belonging to one category, also any combination between features relating to different category is considered to be disclosed by this application. However, all features can be combined to provide synergetic effects that are more than the simple summation of the features.

While the invention has been illustrated and described in detail in the drawings and foregoing description, such illustration and description are to be considered exemplary and not restrictive. The invention is not limited to the disclosed embodiments. Other variations to the disclosed embodiments can be understood and effected by those skilled in the art, from a study of the drawings, the disclosure, and the appended claims.

A single processor or other unit may fulfil the functions of several items recited in the claims.

The mere fact that certain measures are recited in mutually different dependent claims does not indicate that a combination of these measures cannot be used advantageously.

A computer program may be stored/distributed on a suitable medium, such as an optical storage medium or a solid-state medium supplied together with or as part of other hardware, but may also be distributed in other forms, such as via the internet or other wired or wireless communications systems.

Any reference signs in the claims should not be construed as limiting the scope.

## Claims

1. A method of automatically augmenting a knowledge model (300) representing one or more automation engineering domains, the method comprising:
obtaining instance data (402) relating to at least one component of an industrial automation system (100), wherein the component represents an instance of at least one entity in the knowledge model;
processing the instance data using one or more data analytics algorithms to derive knowledge (404) to be added to the knowledge model, wherein the one or more data analytics algorithms for processing the instance data (402) to derive knowledge (404) to be added to the knowledge model (300) comprise one or more machine learning algorithms; and
augmenting the knowledge model to represent the derived knowledge;
the method further comprising creating a machine learning model to derive the knowledge (404) to be added to the knowledge model (300), wherein creating the machine learning model comprises obtaining instance data (402) relating to a first instance of a first entity in the knowledge model (300) and using the instance data of the first instance as target data for training the machine learning model, wherein training the machine learning model further comprises obtaining instance data (402) relating to at least one second instance of a second entity in the knowledge model (300) and using the instance data of the at least one second instance as feature data for training the machine learning model.

2. The method of claim 1, wherein the first and second entities are selected based on a direct or indirect link therebetween in the knowledge model (300).

3. The method of any of claim 1 or 2, further comprising identifying one or more further entities related to the second entity in the knowledge model (300) and obtaining instance data (402) for those further entities for use in training the machine learning model.

4. The method of any preceding claim, further comprising validating the created machine learning model.

5. The method of any preceding claim, further comprising using the created machine learning model to process new instance data (402) to generate one or more responses to be added to the knowledge model (300).

6. The method of any preceding claim, further comprising using the augmented knowledge model (300) to perform semantic querying.

7. The method of any preceding claim, comprising annotating the derived knowledge (404) in the knowledge model (300) to indicate its being algorithm-derived

8. The method of any preceding claim, comprising annotating the derived knowledge (404) in the knowledge model 300 to indicate its uncertainty.

9. A computing system (800) configured to perform the method of any of claims 1-8.

10. A computer program comprising instructions which, when executed by a computing system (800), cause the computing system to perform the method of any of claims 1-8.

11. A computer-readable medium (804, 808) comprising instructions which, when executed by a computing system (800), cause the computing system to perform the method of any of claims 1-8.

## Patentansprüche

1. Ein Verfahren zum automatischen Erweitern eines Wissensmodells (300), das eine oder mehrere Automatisierungstechnik-Domänen repräsentiert, wobei das Verfahren umfasst:
Erhalten von Instanzdaten (402) in Bezug auf wenigstens eine Komponente eines industriellen Automatisierungssystems (100), wobei die Komponente eine Instanz von wenigstens einer Entität in dem Wissensmodell repräsentiert;
Verarbeiten der Instanzdaten unter Verwendung eines oder mehrerer Datenanalysealgorithmen, um Wissen (404) abzuleiten, das zu dem Wissensmodell hinzugefügt werden soll, wobei der eine oder die mehreren Datenanalysealgorithmen zum Verarbeiten der Instanzdaten (402), um Wissen (404) abzuleiten, das zu dem Wissensmodell (300) hinzugefügt werden soll, einen oder mehrere Machine-Learning-Algorithmen umfassen; und
Erweitern des Wissensmodells, um das abgeleitete Wissen zu repräsentieren;
wobei das Verfahren ferner das Erzeugen eines Machine-Learning-Modells umfasst, um das Wissen (404) abzuleiten, das zu dem Wissensmodell (300) hinzugefügt werden soll, wobei das Erzeugen des Machine-Learning-Modells das Erhalten von Instanzdaten (402) in Bezug auf eine erste Instanz einer ersten Entität in dem Wissensmodell (300) umfasst und das Verwenden der Instanzdaten der ersten Instanz als Zieldaten zum Trainieren des Machine-Learning-Modells, wobei das Trainieren des Machine-Learning-Modells ferner das Erhalten von Instanzdaten (402) in Bezug auf wenigstens eine zweite Instanz einer zweiten Entität in dem Wissensmodell (300) umfasst und das Verwenden der Instanzdaten der wenigstens einen zweiten Instanz als Feature-Daten zum Trainieren des Machine-Learning-Modells.

2. Das Verfahren nach Anspruch 1, wobei die erste und zweite Entität auf der Grundlage eines direkten oder indirekten Links dazwischen in dem Wissensmodell (300) ausgewählt werden.

3. Das Verfahren nach einem von Anspruch 1 oder 2, ferner umfassend das Identifizieren einer oder mehrerer weiterer Entitäten, die mit der zweiten Entität in dem Wissensmodell (300) in Beziehung stehen, und das Erhalten von Instanzdaten (402) für diese weiteren Entitäten zur Verwendung beim Trainieren des Machine-Learning-Modells.

4. Das Verfahren nach einem vorhergehenden Anspruch, ferner umfassend das Validieren des erzeugten Machine-Learning-Modells.

5. Das Verfahren nach einem vorhergehenden Anspruch, ferner umfassend das Verwenden des erzeugten Machine-Learning-Modells zum Verarbeiten neuer Instanzdaten (402), um eine oder mehrere Antworten zu erzeugen, die zu dem Wissensmodell (300) hinzugefügt werden sollen.

6. Das Verfahren nach einem vorhergehenden Anspruch, ferner umfassend das Verwenden des erweiterten Wissensmodells (300), um semantisches Querying durchzuführen.

7. Das Verfahren nach einem vorhergehenden Anspruch, umfassend das Annotieren des abgeleiteten Wissens (404) in dem Wissensmodell (300), um dessen Algorithmus-abgeleitet-Sein anzuzeigen.

8. Das Verfahren nach einem vorhergehenden Anspruch, umfassend das Annotieren des abgeleiteten Wissens (404) in dem Wissensmodell (300), um dessen Unsicherheit anzuzeigen.

9. Ein Computersystem (800), das dazu konfiguriert ist, das Verfahren nach einem der Ansprüche 1-8 durchzuführen.

10. Ein Computerprogramm, umfassend Anweisungen, die, wenn sie von einem Computersystem (800) ausgeführt werden, das Computersystem veranlassen, das Verfahren nach einem der Ansprüche 1-8 durchzuführen.

11. Ein computerlesbares Medium (804, 808), umfassend Anweisungen, die, wenn sie von einem Computersystem (800) ausgeführt werden, das Computersystem veranlassen, das Verfahren nach einem der Ansprüche 1-8 durchzuführen.

## Revendications

1. Procédé d'augmentation automatique d'un modèle de connaissances (300) représentant un ou plusieurs domaines d'ingénierie d'automatisation, le procédé comprenant :
l'obtention de données d'instance (402) relatives à au moins un composant d'un système d'automatisation industrielle (100), le composant représentant une instance d'au moins une entité dans le modèle de connaissances ;
le traitement des données d'instance au moyen d'un ou de plusieurs algorithmes d'analyse de données pour déduire des connaissances (404) à ajouter au modèle de connaissances, le ou les algorithmes d'analyse de données servant à traiter les données d'instance (402) pour déduire des connaissances (404) à ajouter au modèle de connaissances (300) comprenant un ou plusieurs algorithmes d'apprentissage automatique ; et
l'augmentation du modèle de connaissances pour représenter les connaissances déduites ;
le procédé comprenant en outre la création d'un modèle d'apprentissage automatique pour déduire les connaissances (404) à ajouter au modèle de connaissances (300), la création du modèle d'apprentissage automatique comprenant l'obtention de données d'instance (402) relatives à une première instance d'une première entité dans le modèle de connaissances (300) et l'utilisation des données d'instance de la première instance comme données cibles pour l'entraînement du modèle d'apprentissage automatique, dans lequel l'entraînement du modèle d'apprentissage automatique comprend en outre l'obtention de données d'instance (402) relatives à au moins une seconde instance d'une seconde entité dans le modèle de connaissances (300) et l'utilisation des données d'instance de ladite au moins une seconde instance en tant que données de caractéristiques pour l'entraînement du modèle d'apprentissage automatique.

2. Procédé selon la revendication 1, dans lequel les première et seconde entités sont sélectionnées sur la base d'un lien direct ou indirect entre celles-ci dans le modèle de connaissances (300).

3. Procédé selon l'une quelconque des revendications 1 ou 2, comprenant en outre l'identification d'une ou de plusieurs autres entités liées à la seconde entité dans le modèle de connaissances (300) et l'obtention de données d'instance (402) pour ces autres entités pour une utilisation dans l'entraînement du modèle d'apprentissage automatique.

4. Procédé selon l'une quelconque des revendications précédentes, comprenant en outre la validation du modèle d'apprentissage automatique créé.

5. Procédé selon l'une quelconque des revendications précédentes, comprenant en outre l'utilisation du modèle d'apprentissage automatique créé pour traiter de nouvelles données d'instance (402) afin de générer une ou plusieurs réponses à ajouter au modèle de connaissances (300).

6. Procédé selon l'une quelconque des revendications précédentes, comprenant en outre l'utilisation du modèle de connaissances augmenté (300) pour effectuer une interrogation sémantique.

7. Procédé selon l'une quelconque des revendications précédentes, comprenant l'annotation des connaissances déduites (404) dans le modèle de connaissances (300) pour indiquer qu'elles sont déduites par algorithme.

8. Procédé selon l'une quelconque des revendications précédentes, comprenant l'annotation des connaissances déduites (404) dans le modèle de connaissances (300) pour indiquer leur incertitude.

9. Système informatique (800) configuré pour exécuter le procédé selon l'une quelconque des revendications 1 à 8.

10. Programme informatique comprenant des instructions qui, lorsqu'elles sont exécutées par un système informatique (800), amènent le système informatique à exécuter le procédé selon l'une quelconque des revendications 1 à 8.

11. Support lisible par ordinateur (804, 808) comprenant des instructions qui, lorsqu'elles sont exécutées par un système informatique (800), amènent le système informatique à exécuter le procédé selon l'une quelconque des revendications 1 à 8.
